# EUROPEAN PATENT APPLICATION

(11) **EP 4 404 674 A1**
(43) Date of publication of application: **24.07.2024**
(21) Application number: 22869768.6
(22) Date of filing: 25.08.2022
(51) Int. Cl.: H04W 74/04, H04W 72/54, H04W 84/12

(54) **ACCESS POINT DEVICE, COMMUNICATION METHOD, COMMUNICATION SYSTEM, AND PROGRAM**

(30) Priority: 14.09.2021 JP 2021149581
(71) Applicant: CANON KABUSHIKI KAISHA, Tokyo 146-8501 (JP)
(72) Inventor: OUCHI, Masatomo, Tokyo 146-8501 (JP)
(74) Representative: Canon Europe Limited
(86) International application number: PCT/JP2022/031986
(87) International publication number: WO 2023/042621

(57) **Abstract**

A communication apparatus determines, based on control for avoiding interference between communication in the communication apparatus and communication in another communication apparatus that is executable by the communication apparatus and the other communication apparatus, whether or not the other communication apparatus is required to execute carrier sense when data held by a partner apparatus that is connected to the communication apparatus is transmitted to the communication apparatus, and transmits, to the partner apparatus, a frame that includes information indicative of a result of the determination and instructs transmission of the data to the partner apparatus.

## Description

### TECHNICAL FIELD

The present invention relates to a technique for improving frequency use efficiency.

### BACKGROUND ART

As a communication standard concerning a wireless LAN (Wireless Local Area Network), an IEEE (Institute of Electrical and Electronics Engineers) 802.11 standard is known. The IEEE 802.11 ax standard as the latest standard of the IEEE 802.11 standard series implements improvement of a communication speed under a congested situation using OFDMA (Orthogonal Frequency-Division Multiple Access), in addition to high peak throughput.

Presently, to further improve the throughput, a task group for defining the IEEE 802.11be standard as a standard replacing the IEEE 802.11 ax standard has been formed. The task group has proposed a multi-AP Coordination configuration in which a plurality of APs (Access Points) perform communication in cooperation with each other. In this configuration, OFDMA communication introduced from the IEEE 802.11ax standard is performed via adjustment among two or more APs (see PTL 1).

### CITATION LIST

### PATENT LITERATURE

PTL 1: US-2019-0288767

### SUMMARY OF INVENTION

### TECHNICAL PROBLEM

In a wireless LAN, a communication apparatus that transmits a signal executes a carrier sense in a channel to transmit the signal, confirms that another communication apparatus does not perform communication, and then transmits the signal, thereby avoiding occurrence of interference. This carrier sense is executed even in a case where the arrangement of the communication apparatus and the like are decided so another communication apparatus on the periphery does not use the channel. Therefore, a carrier sense is unnecessarily executed even in an environment where no interference occurs, and it is impossible to perform communication during this period, resulting in degradation in frequency use efficiency.

### SOLUTION TO PROBLEM

The present invention provides a technique of preventing frequency use efficiency from degrading due to a carrier sense.

An access point apparatus according to one aspect of the present invention is an access point apparatus for executing wireless communication complying with an IEEE 802.11 series, comprising adjustment means for performing adjustment of a communication parameter, between the access point apparatus and another access point apparatus, to avoid interference between communication in the access point apparatus and communication in the other access point apparatus, and transmission control means for controlling to transmit, after the adjustment means performs the adjustment, a trigger frame that provides a data transmission opportunity to at least one partner apparatus and stores 0 in a CS Required Bit.

### ADVANTAGEOUS EFFECTS OF INVENTION

According to the present invention, it is possible to prevent frequency use efficiency from degrading due to a carrier sense.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a wireless communication system;
Fig. 2 is a block diagram showing an example of the hardware arrangement of a communication apparatus;
Fig. 3 is a block diagram showing an example of the functional arrangement of an access point;
Fig. 4 is a block diagram showing an example of the functional arrangement of a station;
Fig. 5 is a sequence chart showing an example of the flow of communication in the wireless communication system;
Fig. 6A is a timing chart for explaining an example of adjustment for interference avoidance;
Fig. 6B is a timing chart for explaining an example of adjustment for interference avoidance;
Fig. 6C is a timing chart for explaining an example of adjustment for interference avoidance;
Fig. 7A is a flowchart illustrating an example of the procedure of processing executed by the communication apparatus;
Fig. 7B is a flowchart illustrating the example of the procedure of the processing executed by the communication apparatus;
Fig. 7C is a flowchart illustrating the example of the procedure of the processing executed by the communication apparatus;
Fig. 8A is a view for explaining the structure of a MAC frame format;
Fig. 8B is a view for explaining the structure of the MAC frame format;
Fig. 8C is a view for explaining the structure of the MAC frame format;
Fig. 9 is a view for explaining the structure of an HT Control field format;
Fig. 10A is a view for explaining the structure of a trigger frame;
Fig. 10B is a view for explaining the structure of the trigger frame;
Fig. 10C is a table for explaining the structure of the trigger frame;
Fig. 10D is a view for explaining the structure of the trigger frame;
Fig. 10E is a view for explaining the structure of the trigger frame; and
Fig. 11 is a sequence chart showing an example of the flow of communication in the wireless communication system.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (System Configuration)

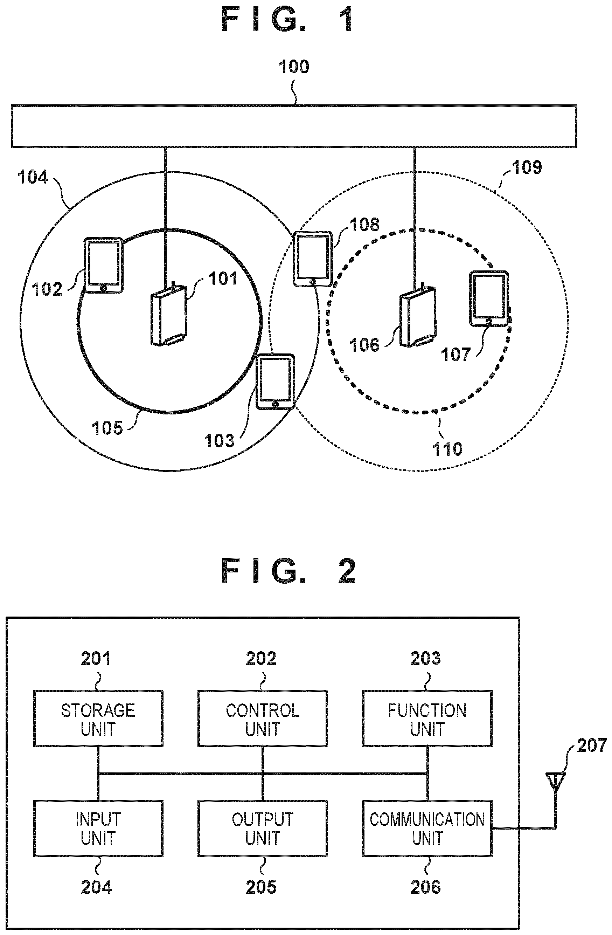

An example of the configuration of a wireless communication system according to this embodiment will be described with reference to Fig. 1. This wireless communication system is a wireless communication system in which each access point (AP) forms a network, and performs, for example, a wireless LAN communication complying with the IEEE 802.11 standard series with a currently connected station (STA). Note that Fig. 1 shows only two APs (AP 101 and AP 106) but three or more APs may exist, as a matter of course, and the number of APs may be one. The two or more APs can communicate with each other via a backhaul network 100. In addition, Fig. 1 shows four STAs (STA 102, STA 103, STA 107, and STA 108) but more STAs may exist or the number of STAs may be three or less. Note that the STAs 102 and 103 are currently connected to the AP 101, and are communication partner apparatuses of the AP 101. Furthermore, the STAs 107 and 108 are currently connected to the AP 106, and are communication partner apparatuses of the AP 106. Note that the AP and the STA only operate as the base station and the terminal of a wireless LAN, respectively, and can be, for example, arbitrary communication apparatuses each capable of operating as both an AP and an STA.

The backhaul network 100 can be formed from, for example, a wired communication line such as Ethernet^{®} or a telephone line but the present invention is not limited to this. For example, the backhaul network 100 may be formed from a wireless communication line or a combination of a wireless communication line and a wired communication line. The wireless communication line can be, for example, a wireless communication line by a cellular communication network such as LTE (Long Term Evolution) or 5th Generation (5G). Alternatively, the wireless communication line may be a wireless communication line based on another wireless communication standard such as WiMAX (Worldwide Interoperability for Microwave Access) or the IEEE 802.11 standard series. Note that if the backhaul network 100 complying with the IEEE 802.11 standard series is formed, a radio channel different from that used between the AP and the STA may be used or the same radio channel may be used. When the AP constructs a DS (Distribution System), the backhaul network 100 can be used to connect the BSS (Basic Service Set) of the AP and another network.

The AP 101 configures and manages a first network (first BSS) for providing a communication service to an STA existing in an area 104. The AP 106 configures and manages a second network (second BSS) for providing a communication service to an STA existing in an area 109. Note that an area 105 represents a range within which communication in the first BSS receives no interference from an AP or an STA belonging to another BSS (for example, the second BSS). Furthermore, an area 110 represents a range within which communication in the second BSS receives no interference from an AP or an STA belonging to another BSS (for example, the first BSS). On the other hand, in the area 104, an area not included in the area 105 is an area within which communication in the first BSS is possible but may receive interference from communication of an AP or an STA belonging to another BSS or may interfere with communication of the AP or the STA. Similarly, in the area 109, an area not included in the area 110 is an area within which communication in the second BSS is possible but may receive interference from communication of an AP or an STA belonging to another BSS or may interfere with communication of the AP or the STA.

In this embodiment, the AP 101 and the AP 106 have a Multi-AP Coordination configuration function. The Multi-AP Coordination function is a function of providing communication to a currently connected STA in cooperation with another AP and providing high-speed communication or communication with a good communication environment, as compared with communication by only one AP. That is, with the Multi-AP Coordination function, it is possible to improve one of indices representing a communication environment with a high signal-to-noise ratio, that with a small interference amount, that with a low communication delay, that with low jitter, and the like, as compared with a case where only one AP provides communication.

There exist a plurality of communication methods by the Multi-AP Coordination function. Such communication methods include, for example, JTX (Joint Transmission) using D-MIMO (Distributed Multiple Input Multiple Output). D-MIMO is MIMO for parallelly transmitting/receiving signals by antennas (APs) that are geographically distributed and arranged. By parallelly transmitting signals from the plurality of APs by JTX using D-MIMO, it is possible to improve the throughput of a downlink (DL) in the STA. As such communication method, there exists null steering for adjusting an antenna weight so a signal does not reach a specific STA with which communication is in progress, based on information indicating the state of a transmission path between the AP and the STA. Examples of the communication method are Coordinated OFDMA and Fractional Coordinated OFDMA. These will be described later. Note that Coordinated OFDMA will be referred to as "C-OFDMA" hereinafter and Fractional Coordinated OFDMA will be referred to as "FC-OFDMA" hereinafter. Furthermore, when C-OFDMA and FC-OFDMA need not be discriminated, they may simply be referred to as C-OFDMA. Note that if Multi-AP Coordination configuration function is not executed, the AP 101 manages only the first BSS, and the AP 106 manages only the second BSS. Note that "management" mainly indicates management of resource allocation of OFDMA and a communication timing.

In this embodiment, an AP notifies an STA that it is unnecessary to execute a carrier sense in an environment where it is estimated that no interference occurs. For example, the AP 101 can create an environment where each of the STAs 102 and 103 need not execute a carrier sense, by performing adjustment using the Multi-AP Coordination function so interference with the AP 106 does not occur. In this case, the AP 101 transmits, to each of the STAs 102 and 103, information indicating that it is unnecessary to execute a carrier sense, and each of the STAs 102 and 103 transmits an uplink (UL) signal to the AP 101 without executing a carrier sense. Note that the uplink is a link used to transmit a signal from a terminal to a base station (that is, from the STA to the AP). On the other hand, a link used to transmit a signal from the AP to the STA is called a downlink (DL). Similarly, the AP 106 also transmits, to each of the STAs 107 and 108, information indicating that it is unnecessary to execute a carrier sense, and each of the STAs 107 and 108 transmits a UL signal to the AP 101 without executing a carrier sense. This can prevent the STA from unnecessarily executing a carrier sense in an environment where interference can be avoided in advance by a cooperative operation between the APs, and prevent frequency use efficiency from degrading due to the unnecessary carrier sense. Note that the AP can notify the STA that it is unnecessary to execute a carrier sense also in a case where, for example, it is found that there is no other BSSs on the periphery. For example, in a case where only one AP is prepared in a limited area, and a network is formed so communication of another AP does not interfere with communication of the one AP, it is unnecessary to consider the influence of interference. In this case, for example, even if the user makes a preset for the AP, and thus the AP does not perform a cooperative operation with another AP, the AP can notify the currently connected STA that it is unnecessary to execute a carrier sense. Note that the AP may confirm via, for example, the backhaul network 100, that no other APs exist nearby, or acquire information indicating that another AP on the periphery stops communication, thereby recognizing an environment where interference cannot occur.

### (Apparatus Arrangement)

Subsequently, an example of the hardware arrangement of each of the communication apparatuses (APs and STAs) will be described with reference to Fig. 2. The communication apparatus includes, as an example of its hardware arrangement, a storage unit 201, a control unit 202, a function unit 203, an input unit 204, an output unit 205, a communication unit 206, and an antenna 207.

The storage unit 201 is formed by one or more memories including both or one of a ROM and a RAM, and stores programs for performing various kinds of operations to be described later and various kinds of information such as communication parameters for wireless communication. Note that ROM is an acronym for Read Only Memory, and RAM is an acronym for Random Access Memory. Other than the memories such as a ROM and a RAM, a storage medium such as a flexible disk, a hard disk, an optical disk, a magnetooptical disk, a CD-ROM, a CD-R, a magnetic tape, a nonvolatile memory card, or a DVD may be used as the storage unit 201. The storage unit 201 may include storage devices such as a plurality of memories.

The control unit 202 is formed by, for example, one or more processors such as a CPU and an MPU, an ASIC (Application Specific Integrated Circuit), a DSP (Digital Signal Processor), an FPGA (Field Programmable Gate Array), or the like. Here, CPU is an acronym for Central Processing Unit, and MPU is an acronym for Micro Processing Unit. Note that the control unit 202 may be a multi-core processor. The control unit 202 executes the programs stored in the storage unit 201, thereby controlling the entire apparatus. Note that the control unit 202 may control the entire apparatus by cooperation of the programs stored in the storage unit 201 and an OS (Operating System).

In addition, the control unit 202 controls the function unit 203 to execute predetermined processing such as image capturing, printing, or projection. The function unit 203 is hardware used by the apparatus to execute predetermined processing. For example, if the apparatus is a camera, the function unit 203 is an image capturing unit and performs image capturing processing. For example, if the apparatus is a printer, the function unit 203 is a printing unit and performs print processing. For example, if the apparatus is a projector, the function unit 203 is a projection unit and performs projection processing. Data to be processed by the function unit 203 may be data stored in the storage unit 201, or may be data communicated with another AP or STA via the communication unit 206 to be described later. The function unit 203 may include a processing circuit for implementing the AP function or the STA function, and may be configured to execute processing as an AP or STA of the wireless LAN complying with the IEEE 802.11 standard series under the control of the control unit 202.

The input unit 204 accepts various kinds of operations from a user. The output unit 205 performs various kinds of outputs for the user. Here, the output by the output unit 205 includes, for example, at least one of display on a screen, audio output by a loudspeaker, vibration output, and the like. Note that both the input unit 204 and the output unit 205 may be implemented by one module, like a touch panel.

The communication unit 206 controls wireless communication complying with the IEEE 802.11 standard series, or controls IP communication. The communication unit 206 is a so-called radio chip, and may itself include one or more processors and memories. In this embodiment, the communication unit 206 can execute processing complying with at least the IEEE 802.11be standard. In addition, the communication unit 206 controls the antenna 207 to transmit and receive radio signals for wireless communication. The AP and the STA communicate contents such as image data, document data, or video data with another communication apparatus via the communication unit 206. The antenna 207 is an antenna that can transmit and receive signals in at least any one of, for example, a sub-GHz band, 2.4-GHz band, 5-GHz band, and 6-GHz band. Note that the frequency bands (and a combination of frequency bands) to which the antenna 207 is adaptable are not particularly limited. The antenna 207 may be one antenna, or may be a set of two or more antennas to perform MIMO (Multi-Input and Multi-Output) transmission/reception. The antenna 207 may include two or more antennas (two or more sets of antennas) that are adaptable to different frequency bands. Note that the communication unit 206 has the Multi-AP Coordination function. Note that Fig. 2 shows one communication unit 206 and one antenna 207 but a plurality of sets of communication units 206 and antennas 207 may be prepared. Alternatively, a plurality of communication units 206 may share one or more antennas 207.

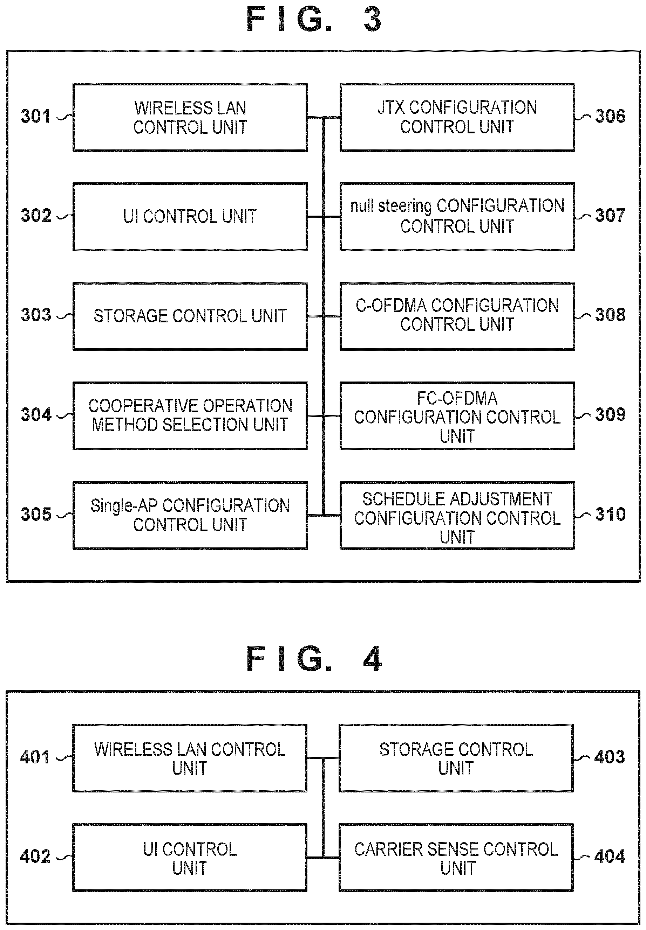

Subsequently, an example of the functional arrangement of the AP (each of the APs 101 and 106) will be described with reference to Fig. 3. The AP includes, for example, a wireless LAN control unit 301, a UI control unit 302, a storage control unit 303, a cooperative operation method selection unit 304, and a Single-AP configuration control unit 305. The AP further includes a JTX configuration control unit 306, a null steering configuration control unit 307, a C-OFDMA configuration control unit 308, an FC-OFDMA configuration control unit 309, and a schedule adjustment configuration control unit 310. Note that these functions can be implemented when, for example, the control unit 202 executes the programs stored in the storage unit 201 (in one example, when the control unit 202 controls the communication unit 206).

The wireless LAN control unit 301 executes control to transmit/receive radio signals to/from another communication apparatus (for example, another AP or STA) in accordance with the wireless LAN standard. That is, the wireless LAN control unit 301 executes wireless LAN communication control such as generation and transmission of a radio frame including control information and data to be transmitted and reception of a radio frame from another communication apparatus in accordance with the IEEE 802.11 standard series. The UI control unit 302 performs processing of, for example, detecting an operation by a user (not shown) of the AP on a user interface (UI) such as a touch panel or buttons and converting the detected operation into data usable in the AP. Furthermore, the UI control unit 302 also has, for example, a function for presenting information to the user, such as display of an image or audio output. The storage control unit 303 executes control for storing information concerning processing executed by the AP in the storage unit 201 and control for reading out data stored in the storage unit 201. The cooperative operation method selection unit 304 selects the method of the Multi-AP Coordination function to be used, based on whether there exists another AP within a predetermined range where a cooperative operation can be performed, the capability information of the other AP, information indicating the connection state between the other AP and the STA, and the like. The Single-AP configuration control unit 305 executes control when the Multi-AP Coordinate function is not operated, that is, when the AP singly communicates with the STA.

The JTX configuration control unit 306, the null steering configuration control unit 307, the C-OFDMA configuration control unit 308, and the FC-OFDMA configuration control unit 309 are function units each for executing the Multi-AP Coordinate function. That is, for example, the JTX configuration control unit 306 performs control to execute JTX using D-MIMO, and the null steering configuration control unit 307 performs control to execute null steering. The C-OFDMA configuration control unit 308 and the FC-OFDMA configuration control unit 309 perform control to execute C-OFDMA and FC-OFDMA, respectively. Note that the schedule adjustment configuration control unit 310 schedules the operation of the Multi-AP Coordinated function.

Fig. 4 shows an example of the functional arrangement of the STA (each of the STAs 102, 103, 107, and 108). The STA includes, for example, a wireless LAN control unit 401, a UI control unit 402, a storage control unit 403, and a carrier sense control unit 404. Note that these functions can be implemented when, for example, the control unit 202 executes the programs stored in the storage unit 201 (in one example, when the control unit 202 controls the communication unit 206). The wireless LAN control unit 401, the UI control unit 402, and the storage control unit 403 are the same as the corresponding function units (the wireless LAN control unit 301, the UI control unit 302, and the storage control unit 303) of the AP, respectively. The carrier sense control unit 404 determines whether it is necessary to execute a carrier sense in a radio frame received from the AP, and performs, based on the result of the determination, control of whether to execute a carrier sense. If, for example, it is determined that it is unnecessary to execute a carrier sense, the carrier sense control unit 404 can control the wireless LAN control unit 401 to transmit a UL radio frame without executing a carrier sense. On the other hand, if, for example, it is determined that it is necessary to execute a carrier sense, the carrier sense control unit 404 can control the wireless LAN control unit 401 to execute a carrier sense before transmitting a UL radio frame.

### (Procedure of Processing)

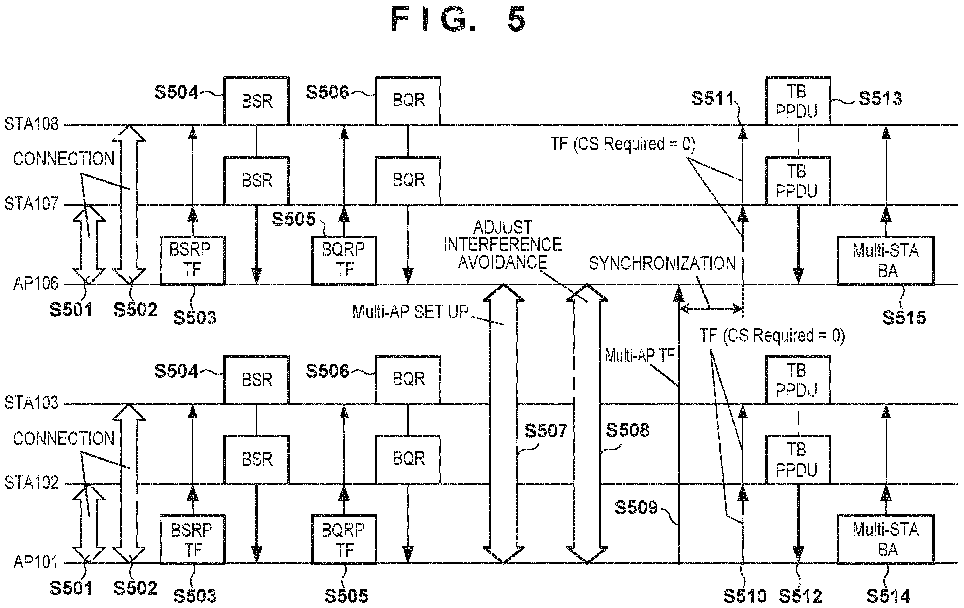

The procedure of communication processing according to this embodiment will be described. Fig. 5 shows an example of the flow of communication executed in the wireless communication system. First, connection between the AP 101 and each of the STAs 102 and 103 is established (S501 and S502). The AP and the STA exchange a Management frame including information elements (IEs) indicating capability information and operation information in the connection establishment processing. The Management frame is, for example, a Beacon, Probe Request/Response, Association Request/Response, or Authentication Request/Response frame. The AP 101 sets an Association ID for each of the STAs 102 and 103 in the connection processing. This ID is used as an STA ID to identify each STA in a TF (trigger frame) to be described later.

The types of IEs indicating the capability information and operation information increase in correspondence with the progress of IEEE 802.11 series standardization. The IE is an HT Capability element in the IEEE 802.11n standard, and is a VHT Capability element in the IEEE 802.11ac standard. This IE represents whether to support a BQR (Bandwidth Query Report) in, for example, the IEEE 802.11ax standard. This is indicated by 1 bit in a "BQR Support" subfield included in an HE MAC Capabilities field. The AP sets the bit to "1" to indicate that a BQR can be received from a terminal, and the STA sets the bit to "1" to indicate that it is possible to generate a BQR and notify the AP of it. Furthermore, an EHT Capabilities element is used to make a notification of whether to support Multi-AP introduced in the IEEE 802.11be standard.

In a state in which the AP 101 is connected to the STAs 102 and 103, the AP 101 transmits a BSRP (BSR Poll) TF for requesting a BSR (Buffer Status Report) to each STA (S503). Then, each of the STAs 102 and 103 transmits, to the AP 101, the BSR indicating a data amount remaining in a transmission buffer in accordance with the BSRP TF (S504). After that, the AP 101 transmits, to each of the STAs 102 and 103, a BQRP (BQR Poll) TF for reporting a BQR indicating the availability of a channel (S505). Then, each of the STAs 102 and 103 transmits a BQR to the AP 102 in accordance with the BQRP TF (S506). Note that the processes from S501 to S506 (to be described later) are executed in the same manner between the AP 106 and each of the STAs 107 and 108.

After that, the AP 101 executes a setup procedure of the Multi-AP configuration with the AP 106 (S507). This procedure includes negotiation for deciding which of the APs 101 and 106 operates as a Master AP (and which of the APs operates as a Slave AP). The Master AP is an AP operating to control the entire Multi-AP configuration, and operates to decide a timing and an RU to be used by each AP. Note that the Master AP can be called a Coordinator AP or Sharing AP. Similarly, the Slave AP can be called a Coordinated AP or Shared AP. Note that in this example, the AP 101 is decided to operate as a Master AP.

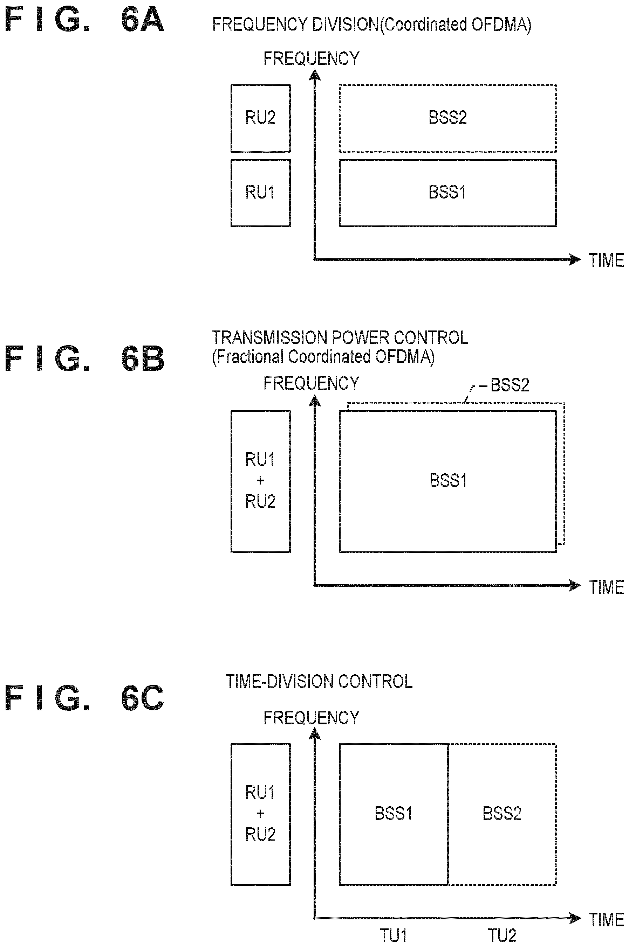

The APs 101 and 106 execute interference avoidance adjustment processing after the setup procedure of the Multi-AP configuration (S508). This adjustment processing will be described with reference to Figs. 6A to 6C.

Referring to Figs. 6A to 6C, the abscissa represents the time and the ordinate represents a frequency. Note that Figs. 6A to 6C schematically show the frequency and the time, and a practical time length, time unit, frequency bandwidth, and frequency unit are not particularly limited. Note that the time length and the time unit can change depending on the use case of the Multi-AP Coordination configuration. For example, a TU (Time Unit, 1024 µs) in the IEEE 802.11 standard series, msec or sec associated with the human sensitivity and operation, or a larger numerical value and unit can be used as the time length and the time unit. As one example, the frequency bandwidth and frequency unit can be an RU (Resource Unit) in OFDMA defined in the IEEE 802.11ax standard. However, the present invention is not limited to this. For example, depending on the capabilities and use cases of the AP and the STA, each band in Multi-band or each 20-MHz channel in Multi-channel can be used as a frequency unit. Note that in Figs. 6A to 6C, a solid-line rectangle represents a time/frequency resource used by the AP 101 (first BSS), and a broken-line rectangle represents a time/frequency resource used by the AP 106 (second BSS).

To describe an operation in C-OFDMA or FC-OFDMA, a concept of an interference limited terminal is introduced. The interference limited terminal is also called an interference limited STA, and indicates an STA that is influenced by communication in a BSS to which the self-apparatus does not belong. In the configuration shown in Fig. 1, the STAs 103 and 108 are interference limited STAs. An STA that is not influenced by communication in another BSS is called a non-interference limited STA. In Fig. 1, the STAs 102 and 107 are non-interference limited STAs. Note that the interference limited STA is sometimes called an edge STA, and the non-interference limited STA is sometimes called a center STA.

Fig. 6A is a timing chart for explaining the C-OFDMA method. In the C-OFDMA method, usable frequency resources (RUs) are clearly separated among a plurality of BSSs (APs and STAs). That is, adjustment is performed so an RU used in the first communication between the AP 101 and each of the STAs 102 and 103 does not overlap an RU used in the second communication between the AP 106 and each of the STAs 107 and 108 in a frequency domain. In this way, C-OFDMA separates the frequency resources usable in the respective BSSs not to overlap each other, thereby making it possible to prevent communications in the BSSs from interfering with each other. That is, if C-OFDMA is used, it is possible to prevent communication between the AP 101 and each of the STAs 102 and 103 from interfering with communication between the AP 106 and each of the STAs 107 and 108.

Subsequently, FC-OFDMA will be described with reference to Fig. 6B. In FC-OFDMA, RUs used among the plurality of BSSs are permitted to overlap each other in the frequency domain. The overlapping frequency domain is used for, for example, communication of the STA located near the AP, thereby making it possible to prevent interference between the BSSs. For example, even if the STA 102 transmits a radio frame with low power, the AP 101 can receive the radio frame. In addition, it is assumed that such radio frame does not reach the AP 106 and the STAs 107 and 108 with sufficient power. Furthermore, it is assumed that a radio frame transmitted by the STA 107 with low power does not reach the AP 101 and the STAs 102 and 103 with sufficient power. Therefore, for example, even if the STA 102 uses the same frequency resource as that of the AP 106 and the STAs 107 and 108, the probability of occurrence of interference that disables these communication apparatuses from performing communication is low. Similarly, for example, even if the STA 107 uses the same frequency resource as that of the AP 101 and the STAs 102 and 103, the probability of occurrence of interference that disables these communication apparatuses from performing communication is low. Therefore, even if the frequency resource allocated to communication of each of the STAs is the same as that allocated in another BSS, it is possible to sufficiently suppress the influence of interference. Note that FC-OFDMA can be said as an interference avoidance method on a power axis in that even if the same frequency and time resources are used in a plurality of BSSs, interference is received at a power level sufficiently lower than the power of a signal in the BSS. Note that Fig. 6B shows an example in a case where the first BSS and the second BSS share the whole frequency resources but only some frequency resources may be shared.

Fig. 6C shows an example in a case where the resources are divided in a time domain. Adjustment is performed so that the first BSS and the second BSS use different time resources. Thus, since no communication is performed in the second BSS while communication is performed in the first BSS, and no communication is performed in the first BSS while communication is performed in the second BSS, it is possible to prevent occurrence of interference between the BSSs.

As described above, in one example, an interference avoidance type concerning which of the frequency domain, power domain, and time domain is used for interference avoidance (suppression) is decided. Note that these are merely examples, and interference avoidance may be performed in another domain (for example, a code or space). At this time, processing for interference avoidance control is performed among the communication apparatuses (AP 101, STA 102, STA 103, AP 106, STA 107, and STA 108), as needed. For example, if the decided interference avoidance type is FC-OFDMA, processing of specifying "how another AP or STA receives a frame from an AP" or "how each AP receives a frame from an STA" is performed. In one example, a predetermined radio frame transmitted by an AP is measured by another AP or STA, and the STA notifies the currently connected AP of a measurement result. For example, the STAs 102 and 103, the AP 106, and the STAs 107 and 108 measure a predetermined radio frame transmitted by the AP 101. Then, each of the STAs 102 and 103 notifies the AP 101 of a measurement result, and each of the STAs 107 and 108 notifies the STA 102 of a measurement result. Similarly, the AP 101, the STAs 102 and 103, and the STAs 107 and 108 measure a predetermined radio frame transmitted by the AP 106. Then, each of the STAs 102 and 103 notifies the AP 101 of a measurement result, and each of the STAs 107 and 108 notifies the STA 102 of a measurement result. This specifies "how another AP or STA receives a frame from an AP". As described above, in interference avoidance control based on power like FC-OFDMA, a kind of sounding processing is performed. The APs 101 and 106 can share the specified result, and use it for interference avoidance processing after that. Similarly, each AP measures a frame from each STA, and the result can be shared. Thus, it is possible to specify whether each STA is an STA existing in an end portion (edge) of a communicable area or an STA existing near the AP (near the center of a communicable area). Note that the STA existing at the edge of the communicable area is considered as the above-described edge STA, and the STA existing near the center of the communicable area is considered as the above-described center STA. After that, the AP 101 serves as a Master AP to transmit a Multi-AP TF to the AP 106 (S509). The Multi-AP TF will be described later. Assume here that the AP 101 decides to perform interference avoidance control in the frequency domain with the AP 106. At this time, the Multi-AP TF transmitted by the AP 101 includes information indicating that interference avoidance control is to be performed in the frequency domain, and information indicating frequency resources usable in the AP 106.

Then, the AP 101 transmits a Basic TF to each of the STAs 102 and 103 (S510), and the AP 106 transmits a Basic TF to each of the STAs 107 and 108 (S511). At this time, for example, the AP 101 decides frequency resources to be allocated to the STAs 102 and 103 among the second frequency resources different from the first frequency resources allocated to the AP 106 in the Multi-AP TF. Furthermore, the AP 106 decides frequency resources to be allocated to the STAs 107 and 108 among the first frequency resource designated in the Multi-AP TF. Note that each of the APs 101 and 106 sets a CS Required bit in a Common field of the Basic TF in accordance with the result of the interference avoidance adjustment processing in S508. This bit indicates whether the STA that is to transmit a radio frame by a TF needs to execute a carrier sense. For example, in a case where the CS Required bit is "0", this indicates that it is unnecessary to execute a carrier sense. For example, if interference avoidance adjustment can be performed, each of the APs 101 and 106 transmits a Basic TF in which the bit is set to "0". For example, as described above, the second frequency resources are used to transmit a signal to the AP 101, and the first frequency resources are used to transmit a signal to the AP 106, thereby making it possible to obtain an environment where there is no mutual interference. Therefore, each of the APs 101 and 106 can notify, by the CS Required bit set in the TF, the STA that it is unnecessary to execute a carrier sense.

Upon receiving the Basic TF from the AP 101, each of the STAs 102 and 103 transmits a TB PPDU (Trigger Based Physical layer Protocol Data Unit) to the AP 101 (S512). Upon receiving the Basic TF from the AP 106, each of the STAs 107 and 108 transmits a TB PPDU to the AP 106 (S513). By the TB PPDU, data to be transmitted from each STA to the AP is transmitted. After that, the AP 101 transmits a Multi-STA BA (Block Ack) to each of the STAs 102 and 103 (S514), and the AP 106 transmits a Multi-STA BA to each of the STAs 107 and 108 (S515). Note that if the AP 106 fails to receive data from the STA 107 or 108, the AP 106 prompts the transmission source of the data to retransmit the data (not shown). At this time, the AP 106 can prompt the transmission source to retransmit the data by transmitting a NACK or by not transmitting an ACK in a case where the HARQ (Hybrid Automatic Repeat reQuest) procedure is adopted. Alternatively, the AP 106 may prompt the transmission source to retransmit the data by transmitting a Block Ack in which no Block Ack Bitmap is set.

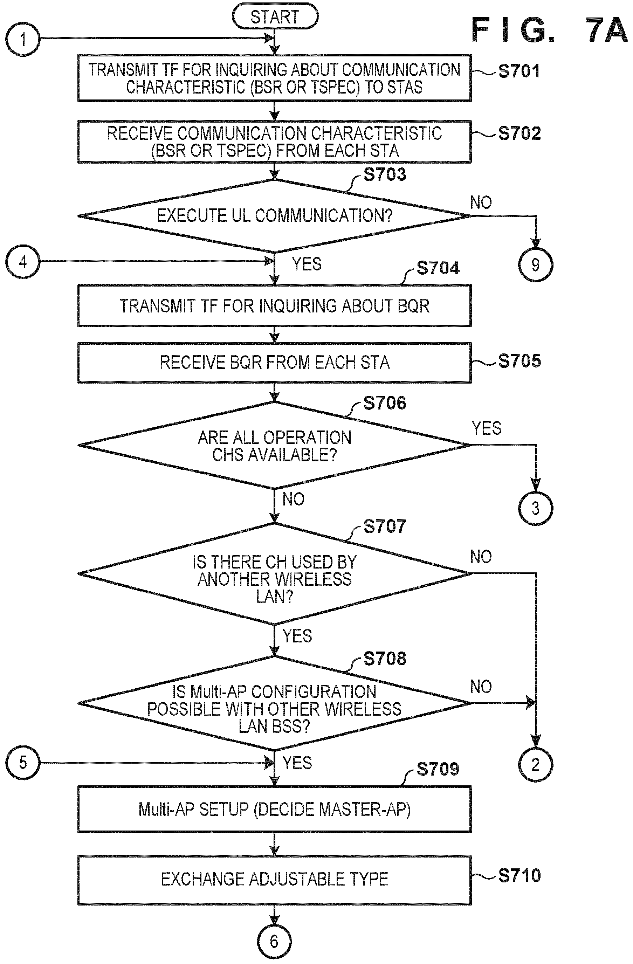

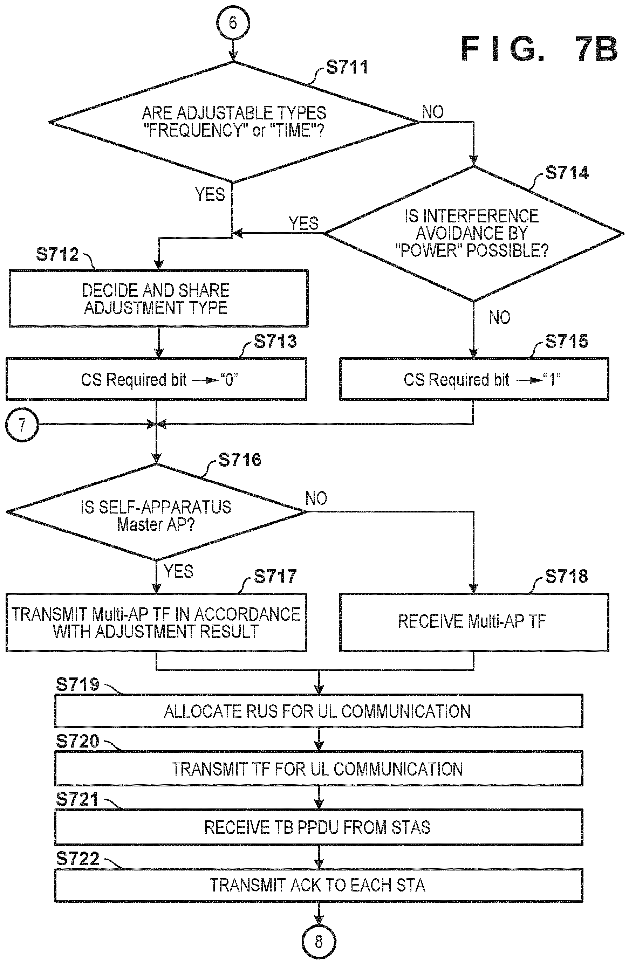

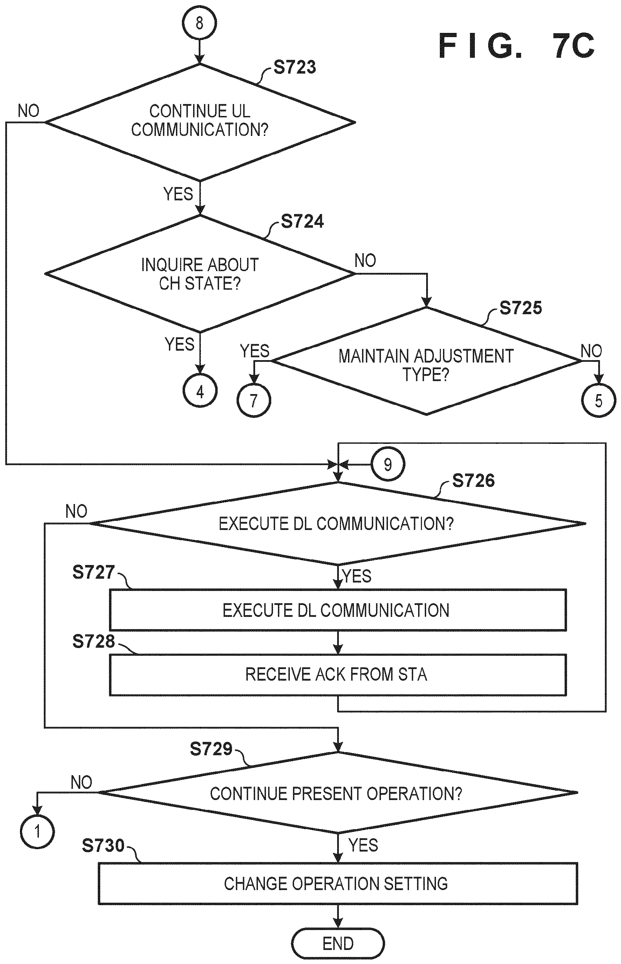

Subsequently, the procedure of processing executed by the AP (AP 101 or 106) will be described in detail with reference to Figs. 7A to 7C. The processing shown in Figs. 7A to 7C is implemented when, for example, the control unit 202 of the AP executes the programs stored in the storage unit 201. Note that at least part of the following processing may be implemented by dedicated hardware. Note that the AP has completed various settings such as a setting concerning the operation of the BSS, the enable/disable setting of a Multi-AP operation according to this embodiment, and a setting of a TF transmission condition. Assume that the AP 101 has established connection to each of the STAs 102 and 103 (completed an association procedure). Similarly, the AP 106 has established connection to each of the STAs 107 and 108. Note that the AP grasps the capabilities of the STA in the association procedure. The capabilities of the STA include a term called "Absolute transmit power accuracy" representing the accuracy of transmission power adjustment. A device class is determined in accordance with this value. A terminal with Absolute transmit power accuracy of ±3dB is classified into a device class "Class A". On the other hand, a terminal with Absolute transmit power accuracy of ±9dB is classified into a device class "Class B". This information can be used to, for example, determine whether interference avoidance control in the power domain is possible.

First, the AP transmits a TF to inquire of the currently connected STAs about a communication characteristic (step S701), and receives communication characteristic information from each STA as a response to the TF (step S702). Note that the communication characteristic is information representing the characteristic of traffic, and a BSR is used in one example. The BSR is included in a Control subfield of a MAC (Medium Access Control) frame (to be described later), and is used to make a notification of a data amount for each access category held by the STA in the transmission buffer. The inquiry about the communication characteristic may be an inquiry about TSPEC (traffic specification). The TSPEC can be used to designate the maximum value and minimum value of a Service Interval, a Service Start Time, the minimum value of a Data Rate, a Burst Size, and the like. Note that the Service Interval is information for specifying a time between two service periods between which no other service period exists. The Service Start Time is information for specifying time at which the first service period of the service starts. The Data Rate represents a communication rate, and the Burst Size represents the burst size of data to be transmitted.

Based on, for example, the communication characteristic acquired in step S702, the AP determines whether to execute UL communication led by the self-apparatus (step S703). At this time, it is particularly determined whether the AP instructs the STA to transmit data by a TF. That is, if it is unnecessary to issue a data transmission instruction by a TF, the AP can determine not to execute UL communication led by the self-apparatus. If, for example, a plurality of STAs hold data to be transmitted, the AP can determine to execute UL communication. Even if only one STA holds data to be transmitted, if the AP should instruct the STA to transmit the data by a TF, the AP determines to execute UL communication led by the self-apparatus. If the AP determines to execute UL communication led by the self-apparatus (YES in step S703), the process advances to step S704; otherwise (NO in step S703), the process advances to step S726.

In step S704, the AP 101 transmits a TF (BQRP TF) for inquiring of each STA about a BQR, and then receives a BQR as a response from each STA (step S705). Note that the BQR is sent using a Control subfield of a MAC frame (to be described later), and is used to make a notification of information representing whether each 20-MHz channel is available, with respect to the channels operated by the BSS. That is, using the BQR, whether each 20-MHz partial frequency band included in the channels operated by the BSS is available (or busy or not available) is indicated by 1 bit at the minimum. For example, in the IEEE 802.11be standard, the frequency bandwidth operable by the BSS is 320 MHz at the maximum, and thus the length of the BQR can be 16 bits (2 octets) or more. Note that the STA can determine the availability of each partial frequency band in accordance with the state at the time of receiving the BQRP TF but the present invention is not limited to this. For example, the STA may determine the availability of each partial frequency band in accordance with the ratio of a state in which the partial frequency band is busy or not available from when the last BQRP TF is received until the current BQRP TF is received.

Based on the received BQR, the AP determines whether all the currently operated channels are available (step S706). If all the currently operated channels are available (YES in step S706), the AP advances the process to step S713. In this case, it is assumed that there is no other BSS that interferes with the BSS formed by the AP. On the other hand, if at least some of the currently operated channels are not available (NO in step S706), the AP subsequently determines whether the channel that is busy or not available is used by a wireless LAN (step S707). For example, the AP performs this determination processing by receiving, from the STA, a notification of a detection result of a signal of the wireless LAN, by detecting a signal of another BSS by the self-apparatus, or based on information of another nearby AP recognized in advance. Note that the AP may receive, from the STA, the notification of the detection result of the signal of the wireless LAN using the additional information notification procedure of the BQR in, for example, step S705. The additional information can indicate information (for example, information for associating a BSSID and a channel with each other) of the BSS that uses the 20-MHz channel when the channel is busy. This information can be communicated by contents of a new Action Frame or Data Frame in the IEEE 802.11 standard.

If the channel that is busy or not available is used by another BSS of the wireless LAN (YES in step S707), the AP determines whether it is possible to communicate with the AP of the BSS in the Multi-AP configuration (step S708). Then, if the AP determines that it is possible to communicate with the other AP that uses the channel in the Multi-AP configuration (YES in step S708), the AP executes Multi-AP setup processing with that AP (step S709). In the Multi-AP setup processing, the AP searches for another AP with which the AP can cooperate in the Multi-AP configuration, and decides the Master AP and the Slave AP. Note that the AP can search for another AP with which the AP can cooperate in the Multi-AP configuration by, for example, receiving a Beacon including information representing that the AP has a Multi-AP capability or the AP is operating in the Multi-AP configuration. Alternatively, the AP may specify another AP with which the AP can cooperate in the Multi-AP configuration by confirming setting information by the user. On the other hand, if the channel that is busy or not available is not used by another BSS of the wireless LAN (NO in step S707) or it is impossible to communicate with the other AP that uses the channel in the Multi-AP configuration (NO in step S708), the AP advances the process to step S715. That is, if it is impossible to perform adjustment by the AP, the process advances to step S715. Note that the AP may prompt the user to change the operation target channel to another channel at this time, and advance the process to step S720.

Upon completion of the Multi-AP setup processing, the AP exchanges information representing the adjustable type of control with another AP forming the Multi-AP configuration (step S710). As described with reference to, for example, Figs. 6A to 6C, the information representing the adjustable type of control can be information representing available interference avoidance control in a specific one of the frequency domain, time domain, and power domain in OFDMA communication.

In accordance with whether it is necessary to avoid a specific channel in communication or it is possible to perform communication in an arbitrary channel, it can be determined whether interference avoidance control in the frequency domain is available. If it is possible to perform communication in an arbitrary channel, it can be determined that interference avoidance control in the frequency domain is available. If it is necessary to avoid a specific channel, it can be determined that interference avoidance control in the frequency domain is not available. For example, in a channel where there exists a radar, it is necessary to monitor channel movement after detection of the radar and a predetermined time. However, if the communication characteristic of the STA cannot permit such processing, it is necessary to avoid using the channel. Therefore, in this case, it is determined that it is impossible to perform adjustment in the frequency domain.

It is determined based on the cycle of communication and a permissible delay whether interference avoidance control in the time domain is available. For example, by performing interference avoidance control in the time domain, a period during which it is impossible to perform communication is generated. However, if the communication characteristic of the STA cannot permit it, it is determined that it is impossible to perform adjustment in the time domain.

The availability of interference avoidance control in the power domain can be determined based on the device classes of the AP and the STA. The AP designates the transmission power of the STA by transmitting a TF set with a value of UL Target receiver power of a User Infor field. On the other hand, to perform interference avoidance by Multi-AP communication, another BSS is notified of a permissible interference level, and a plurality of BSSs that perform Multi-AP communication control the transmission powers. Therefore, the AP designates, as UL Target receiver power, a reception power value to be achieved in the self-apparatus without interfering with another BSS. It is assumed that the range of the transmission power value that satisfies this condition has certain latitude. In a case where this range is smaller than 9 dB, if the STA of Class B is used, an error of the transmission power in the STA may cause the transmission power of the STA to fall outside the range satisfying the condition. As a result, the condition of the reception power in the AP may not be satisfied, or the interference power to another BSS may be larger than a permissible value. Therefore, in this case, it can be determined that it is impossible to perform interference avoidance control in the power domain. Note that "UL Target receiver power" can be designated for each STA, and thus interference avoidance control in the power domain is made available by changing the STA as the target of UL MU communication to the STA of Class A.

The AP determines whether there exists the control type commonly available with another AP with which the information of the type of interference avoidance control that can be executed in the Multi-AP configuration is exchanged in step S710. At this time, if the AP determines that the self-apparatus and the other AP can execute interference avoidance control in the frequency domain or the time domain (YES in step S711), the AP decides the adjustment type, and shares the decided adjustment type with the other AP (step S712). Note that if, for example, the AP can perform control using a plurality of types such as interference avoidance control in both the frequency domain and the time domain or in a combination of the power domain and at least one of the frequency domain and the time domain, the AP may decide to perform interference avoidance control in an arbitrary combination. Then, the AP sets "0" in a "CS Required bit" in a TF to be transmitted in processing (to be described later) (step S713). This "CS Required bit" is a bit representing whether it is necessary to execute a carrier sense. "0" represents that it is unnecessary to execute a carrier sense, and "1" represents that it is necessary to execute a carrier sense. In this example, it is possible to perform interference avoidance control in one of the frequency domain and the time domain among the BSSs, and a TF in which the bit is set to "0" is transmitted to the STA to notify the STA that it is unnecessary to execute a carrier sense.

On the other hand, if interference avoidance control commonly executable by the self-apparatus and the other AP does not include interference avoidance control in the frequency domain and interference avoidance control in the time domain (NO in step S711), the AP determines whether it is possible to execute interference avoidance control in the power domain (step S714). If the AP determines that it is possible to execute interference avoidance control in the power domain (YES in step S714), the AP decides to use interference avoidance control in the power domain (step S712), and sets "0" in the "CS Required bit" in the TF (step S713). On the other hand, if the AP determines that it is impossible to execute interference avoidance control in the power domain (YES in step S714), the AP sets "1" in the "CS Required bit" in the TF (step S715). That is, if it is determined that it is impossible to execute interference avoidance control among the BSSs, the STA is notified that a signal is to be transmitted by executing a carrier sense. Note that the determination processes in steps S714 and S711 may be performed at the same time. However, to determine whether it is possible to execute interference avoidance control based on power, a kind of sounding processing is required, as described above. Therefore, the sounding processing can be executed simultaneously with the determination processing in step S711, and the determination processing in step S714 can be performed after the determination processing in step S711, as shown in Figs. 7A to 7C. Furthermore, it can be assumed that interference avoidance control in the power domain abruptly changes due to a change in communication environment, and thus it is impossible to perform sufficient interference avoidance, as compared with interference avoidance control in the frequency domain or the time domain. Therefore, if it is possible to perform interference avoidance control in the frequency domain or the time domain, the interference avoidance control is used, and only if it is impossible to perform the interference avoidance control, the applicability of interference avoidance control in the power domain may be determined, as shown in Figs. 7A to 7C. Note that the sounding processing may be executed in advance so as to execute the determination processing of step S714 at the time of the processing of step S711. In this case, if it is possible to perform interference avoidance control among the BSSs in any form, the AP may advance the process to step S712; otherwise, the AP may advance the process to step S715.

Note that in the example shown in Figs. 7A to 7C, the example in a case where it is determined that it is unnecessary to execute a carrier sense when interference avoidance control is executed in one of the frequency domain, the time domain, and the power domain has been explained. However, the present invention is not limited to this. For example, the AP may determine that it is unnecessary to execute a carrier sense when interference avoidance control in the frequency domain or the time domain is performed, and determine that it is necessary to execute a carrier sense when only interference avoidance control in the power domain is performed. That is, based on whether the executable type of interference avoidance control is a predetermined type, the AP may determine whether it is necessary to execute a carrier sense.

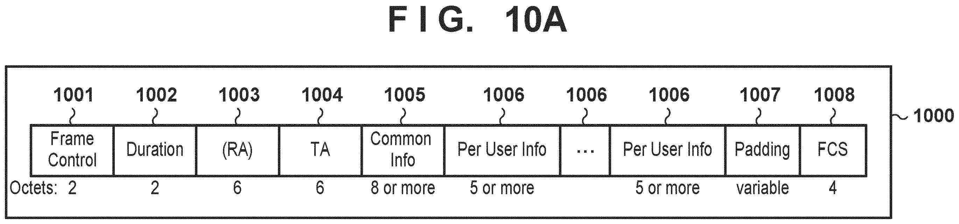

After that, if the self-apparatus is the Master-AP of the Multi-AP configuration (YES in step S716), the AP transmits a Multi-AP TF (step S717); otherwise (NO in step S716), the AP receives a Multi-AP TF (step S718). The Multi-AP TF is an extension of the TF in the IEEE 802.11ax standard, and is used to allocate RUs of OFDMA or a 20-MHz channel not to the STA but to the AP. The frame structure of the Multi-AP TF will be described later with reference to Figs. 10A to 10E.

Then, the AP decides allocation of RUs for UL communication to the STA within the range of the channel or the RUs designated in the Multi-AP TF (step S719), and transmits a TF for UL communication to the STA (step S720). In the Common field of the TF to be transmitted, the value of the "CS Required bit" set in step S714 or S715 described above is set. The value of a UL Length in the TF is decided based on the value of a Duration field designated in the Multi-AP TF. After instructing signal transmission by allocating RUs to one or more STAs by the TF transmitted in step S720, the AP receives a TB PPDU transmitted from the STAs using the instructed RUs (step S721). Then, the AP transmits an acknowledgement (ACK) to the STA as the transmission source of the TB PPDU (step S722). Note that at this time, if the value of the "CS Required bit" is "0", the STA can recognize that it is unnecessary to execute a carrier sense. On the other hand, if the value of the "CS Required bit" is "1", the STA can recognize that it is necessary to execute a carrier sense.

After that, the AP determines whether to continue UL communication (step S723). If the AP decides to continue the UL communication (YES in step S723), the AP determines whether to inquire about a channel state (step S724). The AP can determine to inquire about the channel state using, as a condition, at least one of detection of a change of a wireless medium by the AP itself, a lapse of a predetermined time after the last inquiry about the BQR, and reception of an unsolicited BQR from the STA. Note that the unsolicited BQR is a BQR voluntarily transmitted by the STA that has not received a BQRP TF from the AP. The STA can transmit a MAC frame (to be described later) by including the BQR in the Control subfield of the MAC frame. Note that the MAC frame can be included in the TB PPDU transmitted from the STA in step S721 or can be included in a radio frame transmitted at the time of communication regardless of the TF by EDCA (Enhanced Distributed Channel Access). Note that the STA may notify the AP of the BSR by the unsolicited method independent of the TF.

If the AP determines that it is necessary to inquire about the channel state (YES in step S724), the AP returns the process to step S704. On the other hand, if the AP determines not to inquire about the channel state (NO in step S724), the AP determines whether to maintain the type of interference avoidance control (for example, decided in step S712) (step S725). Then, if the type of interference avoidance control is maintained (YES in step S725), the AP returns the process to step S716; otherwise (NO in step S725), the AP returns the process to step S709. For example, the AP can decide not to maintain the type of interference avoidance control in accordance with a change in status of the BSS formed by the self-apparatus or the other AP as the partner apparatus in the Multi-AP configuration, activation of a different BSS, or the like. This allows the AP to re-execute the Multi-AP setup processing, thereby reselecting an appropriate type of interference avoidance control.

On the other hand, if the AP decides not to continue the UL communication (YES in step S723), the AP decides whether to execute DL communication (step S726). Then, if the AP decides to execute DL communication (YES in step S726), the AP transmits a PPDU to one or more STAs. Note that when transmitting data to a plurality of STAs at once, the AP can use an MU (Multi User) PPDU, and when transmitting data to one STA, the AP can use an SU (Single User) PPDU. Note that at the time of DL communication, the AP may perform sounding processing for MIMO or inquire of the STA about a BQR, as needed. After transmitting the PPDU, the AP receives an acknowledgement (ACK) from the STA as the destination of the PPDU (step S728). Note that if the AP detects a reception failure in the STA, the AP can retransmit the data to the STA (not shown). At this time, for example, the AP can detect a reception failure by receiving a NACK or receiving no ACK in a case where the HARQ (Hybrid Automatic Repeat reQuest) procedure is adopted. Alternatively, the AP may detect a reception failure based on reception of a Block ACK in which no Block ACK Bitmap is set. After that, the AP returns the process to step S726, and decides whether to continue the DL communication.

If the AP decides not to execute DL communication, for example, if there is no data destined for the STA (NO in step S726), the AP determines whether to change the operation of the AP (step S729). For example, the AP determines whether a user operation of changing a setting such as the enable/disable setting of the Multi-AP operation is accepted. Note that if a setting change operation by the user is accepted at an arbitrary stage during execution of the above-described processing, the AP may advance the process to step S729. That is, in the above-described example, the determination processing of step S729 is performed after the end of the series of communication operations including UL communication and the DL communication. However, if the setting is changed during the communication, the AP may immediately advance the process to step S729. If it is determined to change the operation (YES in step S729), the AP changes the operation setting (step S730), and ends the processing. Note that if another setting is changed while keeping the enable setting of the Multi-AP operation, the AP may return the process to step S701 after changing the operation setting. If it is determined not to change the operation (NO in step S729), the AP returns the process to step S701 while maintaining the current setting.

As described above, in this embodiment, for example, if the AP can avoid, in advance, interference among the BSSs in the Multi-AP configuration with another AP, the AP can notify the STA that it is unnecessary to execute a carrier sense. Furthermore, in an environment where the STA should execute a carrier sense, the AP can explicitly notify the STA that it is necessary to execute a carrier sense. Note that in this embodiment, the example of setting the value of the "CS Required bit" based on whether it is possible to adjust interference among the APs has been explained. However, the present invention is not limited to this. For example, if a setting is made to indicate that the BSS formed by the self-apparatus should be prioritized, the AP may always set "0" in the "CS Required bit". That is, regardless of whether it is possible to perform adjustment with another AP, the AP may notify the STA that it is unnecessary to execute a carrier sense in the BSS formed by the self-apparatus. Alternatively, the AP may always set "1" in the "CS Required bit" to indicate that it is necessary to execute a carrier sense. These can be set by, for example, the user operation of the AP. Furthermore, the "CS Required bit" may be set regardless of the above-described interference avoidance control. Note that if the "CS Required bit" is "0", this may indicate that it is necessary to execute a carrier sense, and if the "CS Required bit" is "1", this may indicate that it is unnecessary to execute a carrier sense.

### (Frame Structure)

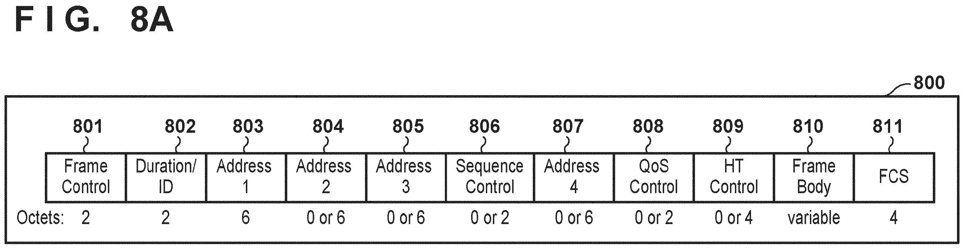

The structure of a MAC (Medium Access Control) frame 800 complying with the IEEE 802.11 standard and IEs (Information Elements) as elements of a Frame Body field 810 will be described with reference to Figs. 8A to 8C.

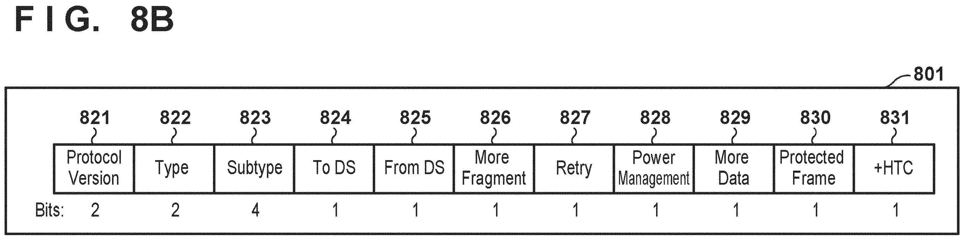

Fig. 8A shows an example of the overall structure of the MAC frame 800. In the MAC frame 800, a Frame Control field 801 is a field concerning control of the overall frame and has a length of 2 octets (16 bits). More specifically, the Frame Control field 801 includes subfields to be described later with reference to Fig. 8B. ADuration/ID field 802 has a length of 2 octets, and indicates, when an MSB (Most Significant Bits: B15) is "1", a frame length or a time such as a TXOP period by the remaining 15 bits within the range from 0 to 32,767 µs. An Address field 803 is a field having a length of 6 octets, and an address such as a BSSID, a transmission source, or a destination is set depending on the type (a Type subfield 822) of the MAC frame. Address fields 804, 805, and 807 are similar fields, but are set, as needed, in accordance with the number of addresses to be indicated. A Sequence Control field 806 is a field set with a length of 2 octets, as needed, to store information such as the sequence number of data or the like.

A QoS Control field 808 is a field set with a length of 2 octets, as needed, to store information such as a BSR (Buffer Status Report) complying with a standard before IEEE 802.11ax. If a BSR complying with a standard before IEEE 802.11ax is stored, the BSR is represented by two pieces of information. Among the two pieces of information, the first information is a 4-bit TID (Traffic Identifier). In the case of the EDCA access method, a value of 0 to 7 among values indicated by the TID indicates one of four access categories of AC_VO (voice)/AC_VI (video)/AC_BE (best effort)/AC_BK (background). The second information is an 8-bit Queue size. The Queue size is expressed in a unit of 256 octets, and indicates a data amount remaining in the transmission buffer.

An HT Control field 809 is a field set with a length of 4 octets, as needed. In the IEEE 802.11ax standard, if the first bit is set to "0", this indicates that this frame is an HT (High Throughput: IEEE 802.11n) frame. If the first two bits are set to 10, this indicates that this frame is a VHT (Very High Throughput: IEEE 802.11ac) frame. If the first two bits are set to 11, this indicates that this frame is an HE (High Efficiency: IEEE 802.11ax) frame. Note that with respect to an EHT (Extremely High Throughput: IEEE 802.11be) frame, it is not decided whether such definition is made.

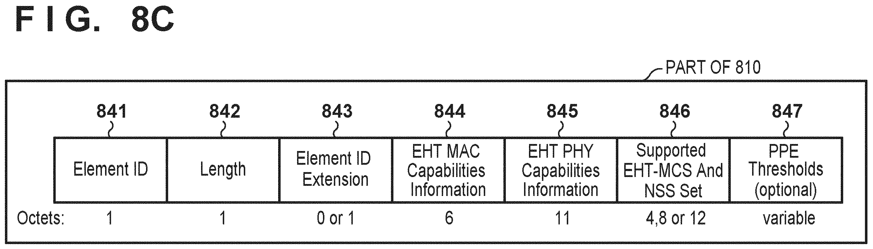

The Frame Body field 810 is a field in which data to be transmitted is stored, and has a length variable depending on the data length. Note that IEs shown in Fig. 8C can be stored as part of the Frame Body field 810. An FCS field 811 is a frame check sequence in which a bit for error detection is stored.

Subsequently, contents of the Frame Control field 801 will generally be described with reference to Fig. 8B. A Protocol Version subfield 821 is a 2-bit subfield indicating the protocol version, and is set to "0" for an IEEE 802.11 frame. A Type subfield 822 is a 2-bit subfield indicating the type of the frame, and indicates any of the Management, Control, and Data frames. A Subtype subfield 823 is a 4-bit subfield in which information for more finely classifying the Management, Control, or Data frame type is stored. A To DS subfield 824 is a 1-bit subfield indicating whether the destination of the frame is a DS (Distribution System). A From DS subfield 825 is a 1-bit subfield indicating whether the transmission source of the frame is the DS. A More Fragment subfield 826 is a 1-bit subfield indicating whether the frame is part of a fragment. A Retry subfield 827 is a 1-bit subfield indicating whether data transmitted before is retransmitted. A Power Management subfield 828 is a 1-bit subfield indicating whether the STA is in a power-saving mode. A More Data subfield 829 is a 1-bit subfield indicating whether there exists further transmission data after the data transmitted by the current frame. A Protected Frame subfield 830 is a 1-bit subfield indicating whether the frame is protected by encryption. A +HTC subfield 831 is a 1-bit subfield indicating whether, for example, the HT Control field 809 is included.

The structure of an IE included in the Frame Body field 810 will generally be described next with reference to Fig. 8C. Fig. 8C particularly shows the structure of the EHT Capabilities element. An Element ID subfield 841 stores the identifier of the IE. A value concerning the EHT of IEEE 802.1 The follows the value of the HE Capabilities element of IEEE 802.11ax and is set to, for example, 255. A Length subfield 842 indicates the length of the information element. In an Element ID Extension subfield 843, the identifier of the IE set as needed is stored. For example, in this embodiment, values corresponding to an EHT Capabilities element concerning capability information and an EHT Operation element concerning operation information are newly defined. These values are stored in the Element ID Extension subfield 843.

An EHT MAC Capabilities Information subfield 844 stores information concerning the capability of the MAC layer. An EHT PHY Capabilities Information subfield 845 stores information concerning the capability of the physical layer (PHY). A Supported EHT-MCS And NSS Set subfield 846 stores a value representing a supported modulation and coding scheme (MCS) and the number of spatial streams (NSS). APPE (Physical layer Packet Extension) Thresholds subfield 847 stores optional information.

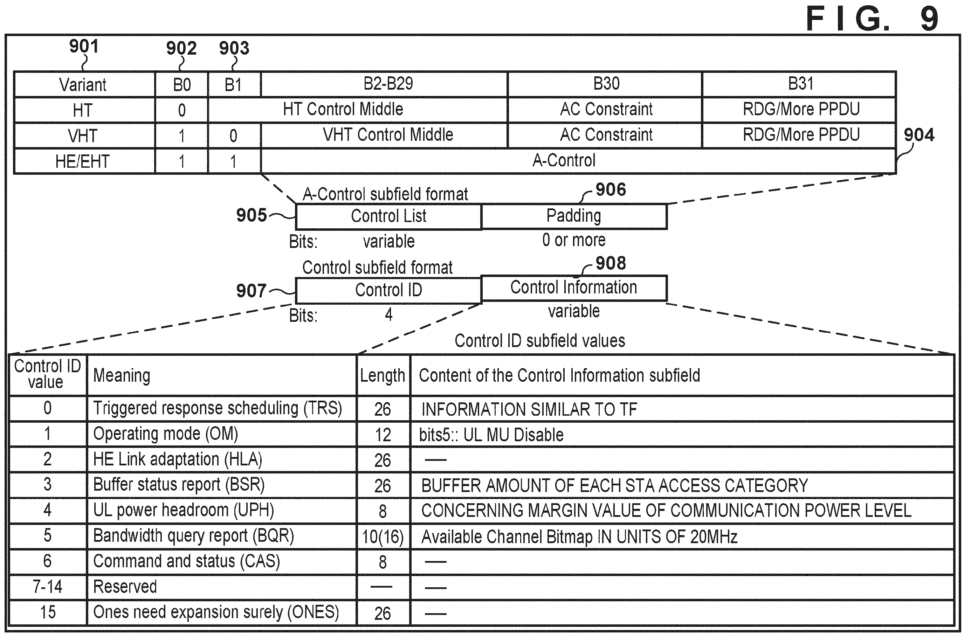

The structure of the HT Control field 809 will generally be described with reference to Fig. 9. The HT Control field 809 has a length of 4 octets = 32 bits. A Variant 901 indicates the type of information. The type of information is decided by two bits (a bit 902 and a bit 903). This embodiment assumes that HE (High Efficiency: IEEE 802.11ax) and EHT (Extremely High Throughput: IEEE 802.11be) correspond to the same bit string "11". Note that the definition for EHT is not determined. If the type is HE or EHT, an A-Control field 904 is a field having a length of 30 bits. The A-Control field 904 includes a Control List subfield 905 and a Padding subfield 906. A Control ID subfield 907 represents the type of the Control List subfield 905, and a Control Information subfield 908 represents contents corresponding to the type. For example, "3" as the BSR in step S702 of this embodiment is stored in the Control ID subfield 907, and 26-bit information is stored in the Control Information subfield 908. Furthermore, "5" as the BQR in step S705 is stored in the Control ID subfield 907, and 10- or 16-bit information is stored in the Control Information subfield 908. The 10- or 16-bit information indicates the state of each 20-MHz channel. Note that this is merely an example, and information having bits the number of which is larger than 16 may be used to indicate the state of each channel. The state of each channel can be indicated by, for example, 1 bit representing an "idle" or "busy" state. Note that a notification of details of the "idle" state may be made.

The structure of a trigger frame (TF 1000) will generally be described with reference to Figs. 10A to 10E. The TF is a frame introduced from the IEEE 802.11ax standard, and is a frame indicating an activation timing, radio channel information using the frame, and the like, which are needed for a plurality of STAs (users) to simultaneously transmit frames to an AP.

A Frame Control field 1001 shown in Fig. 10A is a field common to the IEEE 802.11 standard series, and stores, for example, a value representing that the frame is a trigger frame of IEEE 802.11be. This field has a length of 2 octets. A Duration field 1002 is a field indicating the time length of this frame, and has a length of 2 octets. An RA field 1003 is a field indicating a receiver address, and has a length of 6 octets. A TA field 1004 is a field indicating a transmitter address, and has a length of 6 octets. A Common Info field 1005 is a field indicating information common to a plurality of terminals that are the destinations of the TF, and has a length of 8 octets or more. The Common Info field 1005 will be described in detail later. A Per User Info field 1006 is a field indicating individual information for each of the destinations of the TF, and an individual field is prepared for each destination. Each Per User Info field 1006 has a length of 5 octets or more. A Padding field 1007 is a field used to give a time to the terminal group that has received the TF. The AP decides the time based on MinTrigProcTime of each STA. In general, a padding corresponding to the maximum value of MinTrigProcTime of the STAs as the destinations of the TF is used. An FCS field 1008 is a frame check sequence in which a bit for error detection is stored.

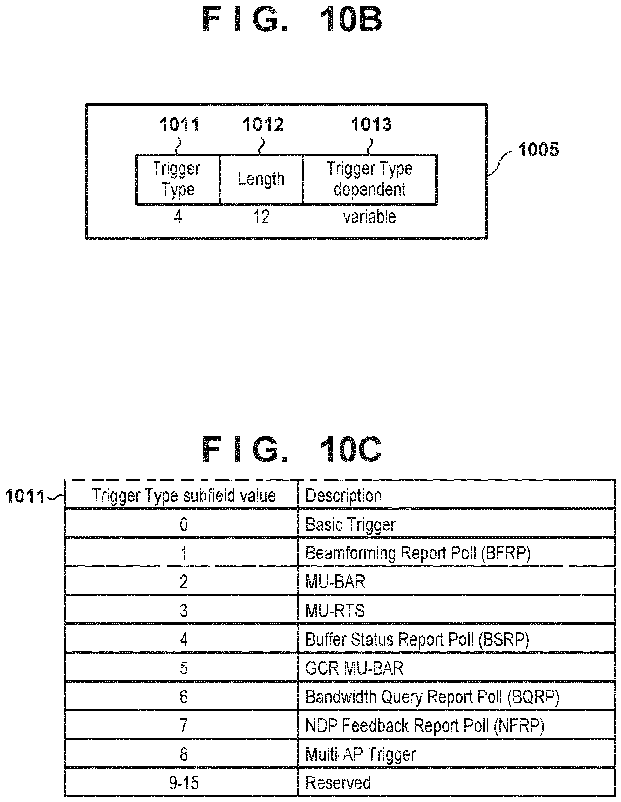

As shown in Fig. 10B, the Common Info field 1005 includes a Trigger Type subfield 1011, a Length subfield 1012, and a Trigger Type dependent subfield 1013. The Trigger Type subfield 1011 is a 4-bit subfield, details of which are as shown in, for example, Fig. 10C. In this embodiment, as one example, for a Multi-AP TF, a value "8" of the Trigger Type subfield 1011 is newly prepared. Thus, another AP that has received the TF 1000 in which the value of the Trigger Type subfield 1011 is "8" can recognize that this TF is a Multi-AP TF. The Length subfield 1012 stores a length corresponding to the type designated by the Trigger Type subfield 1011. The Trigger Type dependent subfield 1013 gives an explanation corresponding to the type designated by the Trigger Type subfield 1011.

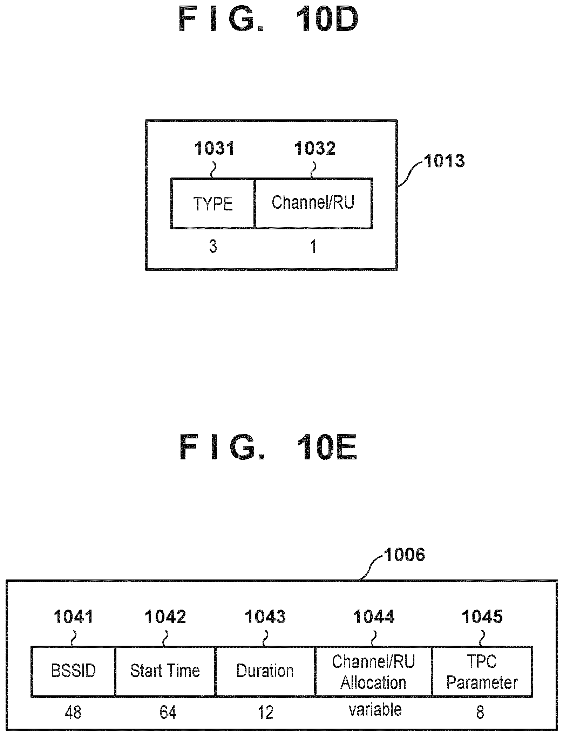

Fig. 10D shows details of the Trigger Type dependent subfield 1013 in a case where the Trigger Type subfield 1011 is set to "8" and the TF is a Multi-AP TF. A type 1031 stores information representing the type of interference avoidance control to be used in the Multi-AP configuration. The type 1031 can be represented as, for example, 3-bit information in which 1 bit indicates whether to use interference avoidance control in each of the frequency domain, the time domain, and the power domain. For example, bit 0 indicates whether to use interference avoidance control in the frequency domain, bit 1 indicates whether to use interference avoidance control in the time domain, and bit 2 indicates whether to use interference avoidance control in the power domain. For example, a bit string "101" indicates that interference avoidance control is performed in the frequency domain and the power domain. A bit string "011" indicates that interference avoidance control is performed in the time domain and the power domain. A bit string "111" indicates that interference avoidance control is performed in all the frequency domain, the time domain, and the power domain. Note that this is merely an example, and an arbitrary bit string that can represent a possible combination may be used and a region of the number of bits corresponding to the bit string can be prepared as the type 1031. A Channel/RU 1032 is 1-bit information representing whether to perform frequency division by a 20-MHz channel or in a unit of RUs.

Fig. 10E shows exemplary details of the Per User Info field 1006 in a case where the Trigger Type subfield 1011 is set to "8" and the TF is a Multi-AP TF. A BSSID subfield 1041 is a 48-bit field for uniquely identifying the AP as the transmission destination of the Multi-AP TF. For example, when the AP 101 transmits the Multi-AP TF to the AP 106, the identification information of the AP 106 is stored in the BSSID subfield 1041. A Start Time subfield 1042 is a 64-bit field indicating the start time at which the BSS can use the channel or the RU. The start time can be represented by, for example, relative time from the transmission time of the Multi-AP TF or absolute time. A Duration subfield 1043 is a 32-bit field indicating the time during which the BSS can use the channel or the RU. Note that in the Multi-AP TF, the Length subfield 1012 can be ignored. A Channel/RU Allocation subfield 1044 is a field that stores information representing allocation of each 20-MHz channel or frequency resources by RUs. Details of allocation of RUs in IEEE 802.11be are not determined. In one example, similar to IEEE 802.11ax, the Channel/RU Allocation subfield 1044 can have a length of 9 bits or more. In a TPC Parameter subfield 1045, a restriction value of transmission power control for the STA is set in a case where interference avoidance control in the power domain is used.

As described above, a Multi-AP TF is newly defined, thereby making it possible to perform communication by sharing, among APs, interference avoidance control to be executed. That is, for example, in a case where interference avoidance control in the frequency domain is performed, an AP transmits, to another AP, a Multi-AP TF in which a bit corresponding to the frequency domain is set to "1" in the type 1031. At this time, frequency resources usable by the AP as the transmission destination of the Multi-AP are indicated by the Channel/RU Allocation subfield 1044. Note that the frequency resources are designated in a unit of 20 MHz in a case where the channel is designated by the Channel/RU 1032 or in a unit of RUs in a case where the RU is designated by the Channel/RU 1032. This notifies the other AP of information representing that it is possible to execute interference avoidance control in the frequency domain. Furthermore, in a case where, for example, interference avoidance control in the time domain is performed, an AP transmits, to another AP, a Multi-AP TF in which a bit corresponding to the time domain is set to "1" in the type 1031. At this time, the time resources usable by the AP as the transmission destination of the Multi-AP are indicated by the Start Time subfield 1042 and the Duration subfield 1043. This notifies the other AP of information representing that it is possible to execute interference avoidance control in the time domain. In a case where, for example, interference avoidance control in the power domain is performed, an AP transmits, to another AP, a Multi-AP TF in which a bit corresponding to the power domain is set to "1" in the type 1031. Then, the TPC Parameter subfield 1045 is used to make a notification of information representing restriction of transmission power for preventing a transmitted signal of an STA currently connected to the AP as the transmission destination of the Multi-AP TF from interfering the AP as the transmission source of the TF.

Note that the example in a case where interference avoidance control in the frequency domain is executed has been described above with reference to Fig. 5 but an example in a case where interference avoidance control in the power domain is executed will now be described. In this case, the AP 101 notifies, using the Multi-AP TF in S509, the AP 106 of information representing that interference avoidance control in the power domain is executed and information concerning restriction of transmission power. The information concerning restriction of transmission power can indicate the maximum value of transmission power to be satisfied by all the STAs (for example, the STAs 107 and 108) currently connected to the AP 106. Then, in S510, the AP 101 transmits, to each of the STAs 102 and 103, a TF including information for designating restriction of transmission power of each of the STAs 102 and 103 so as to sufficiently suppress interference to the AP 106. Furthermore, in S511, based on the information stored in the TPC Parameter subfield 1045 from the AP 101, the AP 106 transmits, to each of the STAs 107 and 108, a TF including information for designating restriction of transmission power of each of the STAs 107 and 108. Note that the restriction of transmission power of the STA is set by the "UL Target receive power" included in the Per User Info field 1006 in the Basic TF. This ensures, for example, a state in which UL communication from each of the STAs 102 and 103 to the AP 101 does not interfere with the AP 106 and UL communication from each of the STAs 107 and 108 to the AP 106 does not interfere with the AP 101. As a result, it is possible to construct an environment where a carrier sense by the STA is not required. Therefore, in the Basic TF in S510 and S511, the "CS Required bit" is set to "0" to omit a carrier sense by the STA, thereby making it possible to prevent frequency use efficiency from degrading due to a carrier sense.

Furthermore, the maximum value of transmission power may be designated concerning a specific STA. For example, the STA 102 or 107 exists at a position near the currently connected AP, and thus suppression of transmission power hardly influences communication. Therefore, the STA may be designated to transmit a Basic TF that instructs to lower transmission power. For example, it is also possible to perform interference avoidance control in both the frequency domain and the time domain. In this case, for example, the STAs 102 and 107 may perform UL communication with small transmission power using the same frequency resources, and different frequency resources may be allocated to the STAs 103 and 108. This also ensures a state in which UL communication from each of the STAs 102 and 103 to the AP 101 does not interfere with the AP 106 and UL communication from each of the STAs 107 and 108 to the AP 106 does not interfere with the AP 101.

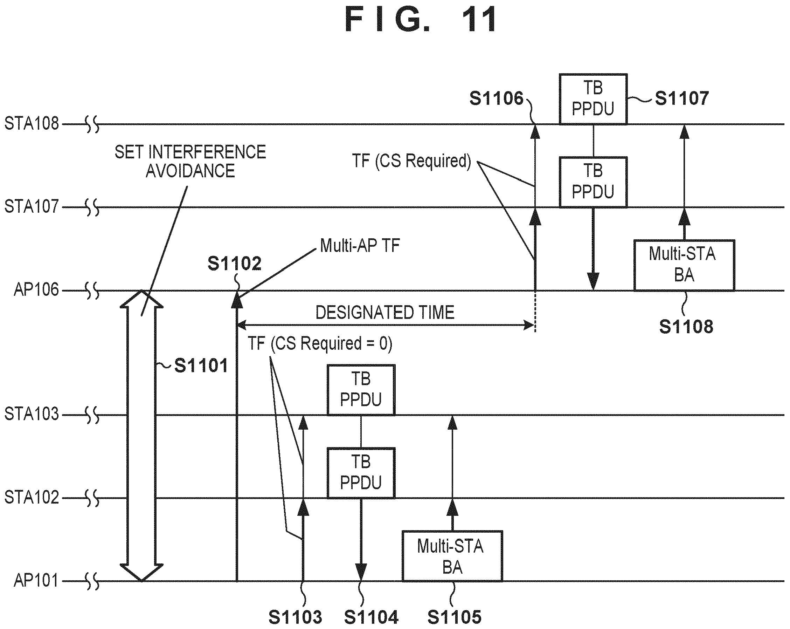

Subsequently, an example in a case where interference avoidance control in the time domain is executed will be described with reference to Fig. 11. Note that processes up to S507 are the same as those in Fig. 5 and a description thereof will be omitted. In this processing, the AP 101 executes adjustment of interference avoidance with the AP 106, and decides to set interference avoidance control in the time domain (S1101). Then, the AP 101 decides time resources to be used by each of the AP 101 (first BSS) and the AP 106 (second BSS). The AP 101 sets a value indicating the time domain in the type 1031, and transmits, to the AP 106, a Multi-AP TF in which a time for performing UL communication in the second BSS is designated by the Start Time subfield 1042 and the Duration subfield 1043 (S1102). Note that as a timing of starting UL communication in the first BSS, a timing when an SIFS (Short Inter Frame Space) elapses after transmission of the Multi-AP TF can be set. As a timing of UL communication in the second BSS, a timing when an SIFS, a communication duration, and an ACK transmission period elapse after transmission of the Multi-AP TF and then an SIFS further elapses can be set.

Then, the AP 101 transmits a Basic TF to each of the STAs 102 and 103 at the timing of starting the UL communication in the first BSS (S1103). At this time, since it is assumed that no communication is performed in the second BSS and thus no interference occurs, a Basic TF in which the CS Required bit is set to "0" is transmitted. Thus, each of the STAs 102 and 103 recognizes not to execute a carrier sense. Then, each of the STAs 102 and 103 transmits a TB PPDU to the AP 101 in response to the TF (S1104), and the AP 101 transmits an ACK to each of the STAs 102 and 103 (S1105). On the other hand, the AP 106 stands by a period indicated by the Start Time subfield 1042 designated in the TF after transmission of the Multi-AP TF in S1102, and then transmits a Basic TF to each of the STAs 107 and 108 (S1106). At this time, since it is assumed that no communication is performed in the first BSS and thus no interference occurs, a Basic TF in which the CS Required bit is set to "0" is transmitted. Thus, each of the STAs 107 and 108 recognizes not to execute a carrier sense. Then, each of the STAs 107 and 108 transmits a TB PPDU to the AP 106 in response to the TF (S1107), and the AP 106 transmits an ACK to each of the STAs 107 and 108 (S1108).

Note that in the example shown in Fig. 11, the example in a case where communication is first performed in the first BSS and then communication is performed in the second BSS has been described but the order may be reversed. That is, communication may be performed first in the second BSS. Furthermore, in the first BSS or the second BSS, communication may be performed without using a Basic TF. That is, UL communication by EDCA may be performed. Alternatively, DL communication may be performed. This is because adjustment has been performed so communication is not performed in another BSS during the set period.

As described above, an AP causes an STAto execute a carrier sense only when it is required (especially during an operation in the Multi-AP configuration), thereby making it possible to prevent frequency use efficiency from degrading due to a carrier sense. Furthermore, since an unnecessary carrier sense is not executed, it is possible to reduce the processing load of the STA and reduce the power consumption of the STA.

### (Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2021-149581 filed September 14, 2021, which is hereby incorporated by reference herein.

## Claims

1. An access point apparatus for executing wireless communication complying with an IEEE 802.11 series, comprising:
adjustment means for performing adjustment of a communication parameter, between the access point apparatus and another access point apparatus, to avoid interference between communication in the access point apparatus and communication in the other access point apparatus; and
transmission control means for controlling to transmit, after the adjustment means performs the adjustment, a trigger frame that provides a data transmission opportunity to at least one partner apparatus and stores 0 in a CS Required Bit.

2. The access point apparatus according to claim 1, wherein the other access point apparatus is an access point apparatus that cooperates with the access point apparatus, and the adjustment of the communication parameter is executed based on a result of negotiation with the other access point apparatus.

3. The access point apparatus according to claim 1 or 2, further comprising determination means for determining whether adjustment can be performed to avoid interference with the other access point apparatus by the adjustment of the adjustment means.

4. The access point apparatus according to claim 1 or 2, wherein
as a result of the adjustment by the adjustment means, in a case where a trigger frame that provides a data transmission opportunity to at least one partner apparatus is transmitted in a status in which a transmission path that can avoid interference with the other access point apparatus can be ensured as a transmission path used by the access point apparatus to communicate with a partner apparatus, the transmission control means controls to transmit the trigger frame that stores 0 in the CS Required Bit, and
in a case where a trigger frame that provides a data transmission opportunity to at least one partner apparatus is transmitted in a status in which only a transmission path where interference with the other access point apparatus can occur can be ensured as a transmission path used by the access point apparatus to communicate with a partner apparatus, the transmission control means controls to transmit the trigger frame that stores 1 in the CS Required Bit.

5. The access point apparatus according to any one of claims 1 to 4, wherein in a case where a trigger frame that provides a data transmission opportunity to at least one partner apparatus is transmitted in a status in which the adjustment means does not perform the adjustment, the transmission control means controls to transmit the trigger frame that stores 0 in the CS Required Bit.

6. The access point apparatus according to any one of claims 1 to 5, wherein the adjustment of the communication parameter by the adjustment means includes at least one of adjustment to avoid interference by making frequency resources, used by the access point apparatus and the other access point apparatus to operate, different from each other, adjustment of a communication parameter concerning communication power, and adjustment of a communication parameter concerning a period during which communication is to be performed.

7. The access point apparatus according to claim 2, wherein information for the negotiation is communicated using a trigger frame for exchanging information between access points.

8. A communication method of executing wireless communication complying with an IEEE 802.11 series, comprising:
performing adjustment of a communication parameter, between an access point apparatus and another access point apparatus, to avoid interference between communication in the access point apparatus and communication in the other access point apparatus; and
controlling to transmit, after the adjustment is performed, a trigger frame that provides a data transmission opportunity to at least one partner apparatus and stores 0 in a CS Required Bit.

9. The communication method according to claim 8, further comprising controlling to transmit, after receiving the trigger frame that stores 0 in the CS Required Bit, uplink data to the access point apparatus without executing a carrier sense, which is executed by at least one of the at least one partner apparatus.

10. A communication system comprising at least an access point apparatus and a station apparatus that execute wireless communication complying with an IEEE 802.11 series,
the access point apparatus comprising
adjustment means for performing adjustment of a communication parameter, between the access point apparatus and another access point apparatus, to avoid interference between communication in the access point apparatus and communication in the other access point apparatus, and
transmission control means for controlling to transmit, after the adjustment means performs the adjustment, a trigger frame that provides a data transmission opportunity to at least one station apparatus including at least the station apparatus and stores 0 in a CS Required Bit, and
the station apparatus comprising second transmission control means for controlling to transmit, after receiving the trigger frame that stores 0 in the CS Required Bit, uplink data to the access point apparatus without executing a carrier sense.

11. A program for causing a computer to function as an access point apparatus defined in any one of claims 1 to 7.
